**Europäisches Patentamt**

(19) **European Patent Office**

**Office européen des brevets**

(11) Numéro de publication: **0 122 172**
**B1**

(12) # FASCICULE DE BREVET EUROPEEN

(45) Date de publication du fascicule du brevet:
**26.08.87**

(51) Int. Cl.⁴: **G 21 C 17/10,** G 21 D 3/10

(21) Numéro de dépôt: **84400462.2**

(22) Date de dépôt: **08.03.84**

(54) Dispositif de détermination rapide et précise de la puissance d'un réacteur nucléaire à eau sous pression.

(30) Priorité: **11.03.83 FR 8303999**

(43) Date de publication de la demande:
**17.10.84 Bulletin 84/42**

(45) Mention de la délivrance du brevet:
**26.08.87 Bulletin 87/35**

(84) Etats contractants désignés:
**BE CH DE GB IT LI SE**

(56) Documents cités:
**CA - A - 1 083 268**
**FR - A - 1 356 683**
**FR - A - 1 401 115**
**FR - A - 2 373 057**
**FR - A - 2 416 531**
**US - A - 3 752 735**
**US - A - 3 791 922**

(73) Titulaire: **FRAMATOME ET CIE., Tour Fiat 1, Place de la Coupole, F-92400 Courbevoie (FR)**

(72) Inventeur: **Leroy, Jean, 91 avenue du Général Leclerc, F-91190 Gif-sur-Yvette (FR)**
Inventeur: **Ruiz, Pierre, 15 avenue Georges Clémenceau, F-93150 Blanc Mesnil (FR)**

(74) Mandataire: **Lavoix, Jean et al, c/o Cabinet Lavoix 2, Place D'Estienne D'Orves, F-75441 Paris Cedex 09 (FR)**

ACTORUM AG

## Description

La présente invention concerne la détermination de la puissance d'un réacteur à eau sous pression comportant au moins une boucle de réfrigération et de préférence trois ou quatre boucles.

Il est important de connaître à tout instant, en particulier pour des raisons de sécurité, la puissance d'un réacteur nucléaire.

On utilise de façon courante, pour mesurer la puissance, des détecteurs de neutrons installés à l'extérieur de la cuve du réacteur. De tels détecteurs délivrent des signaux à réponse rapide mais ils présentent l'inconvénient de délivrer des signaux peu précis en particulier dans les phases de fonctionnement transitoire.

Pour obtenir des résultats plus précis on peut calculer la puissance du réacteur par un bilan thermique effectué à partir de mesure de la température du fluide primaire sur la branche froide et sur la branche chaude des boucles primaires. Mais si les résultats obtenus par un tel procédé sont précis, ils sont toutefois peu rapides, en raison de l'importante constante de temps des variations de températures.

Les constructeurs ont déjà imaginé des dispositifs permettant une détermination correcte du point de vue de la précision et de la rapidité de la puissance d'un réacteur nucléaire. On peut citer par exemple le FR-A 2 373 057 qui décrit un appareil permettant de déterminer la puissance du réacteur à partir de l'élévation d'enthalpie du cœur, cette élévation d'enthalpie étant calculée en utilisant la célérité du son dans le fluide des branches chaude et froide du circuit primaire. Toutefois cet appareil implique l'installation de capteurs sur les tuyauteries du circuit primaire, l'inconvénient majeur étant la multiplication des piquages dans lesdites tuyauteries et les conséquences de ceci sur la pose, plus délicate du calorifuge de celles-ci.

Le US-A 3 752 735 fait connaître un dispositif de détermination de la puissance d'un réacteur nucléaire à eau sous pression comportant des moyens de mesure de la puissance neutronique et des moyens de mesure de la température du fluide primaire en un point de la branche froide et en un point de la branche chaude, pour chacune des boucles de réfrigération.

Cependant le dispositif du US-A 3 753 735 ne comporte pas de moyens de traitement des mesures et de calcul d'enthalpie permettant d'obtenir, à tout instant, une valeur précise de la puissance. Ce dispositif permet uniquement d'obtenir un signal image de la puissance thermique du cœur en utilisant la mesure de température branche chaude et branche froide et en compensant dynamiquement ces mesures de températures selon une loi dans laquelle intervient la dérivée par rapport au temps de la différence entre les températures branche chaude et branche froide. Un tel dispositif permet d'obtenir un signal rapide mais la loi utilisée pour obtenir ce signal n'est qu'approximative et apporte une certaine imprécision à ce dernier.

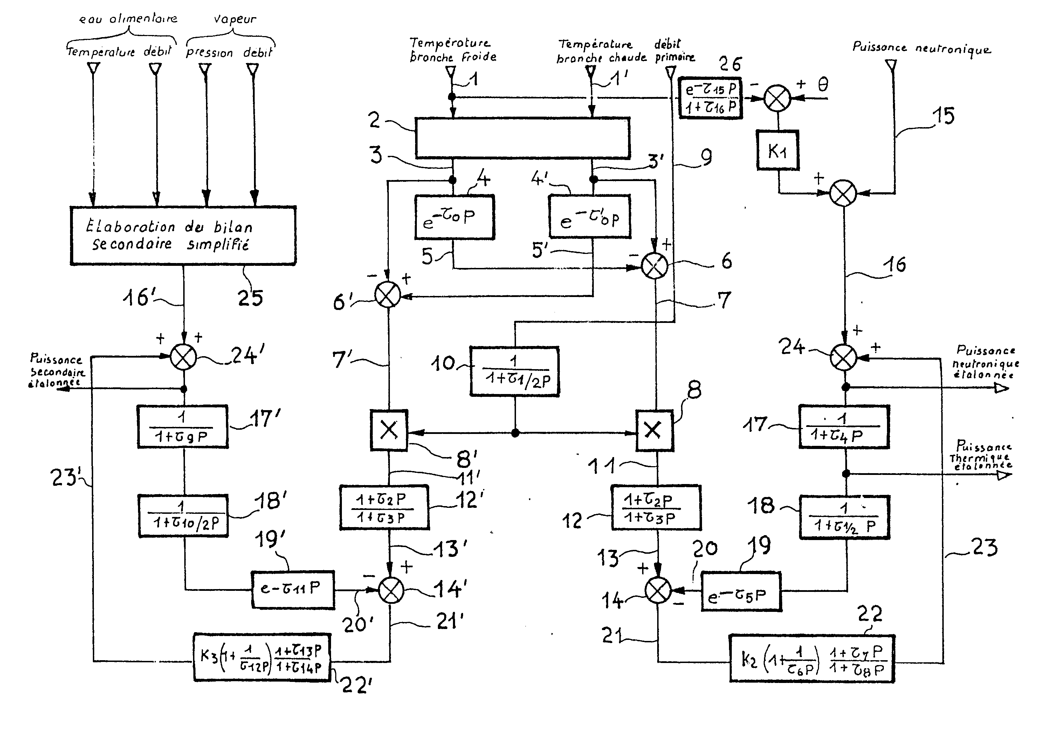

La demande de brevet français FR-A 2 416 531 décrit un procédé de détermination de la puissance d'un réacteur nucléaire, qui combine un signal de puissance thermique à forte constante de temps mais relativement précis à un signal de puissance neutronique à réponse rapide mais moins précise. Toutefois ce procédé ne donne pas des résultats très précis en transitoire puisqu'il se contente d'ajuster le signal de puissance thermique au moyen d'un signal de puissance neutronique retardé par une unité de réglage de gain 6 et une unité d'intégration 7 (Figure 1). Beaucoup de données variables en régime transitoire ne sont ici pas prises en compte.

D'autre part, on ne connaît pas jusqu'à présent de dispositif simple permettant d'obtenir à la fois la puissance primaire et la puissance secondaire d'un réacteur nucléaire de façon rapide et précise, aussi bien en régime permanent qu'en régime transitoire.

Le but de l'invention est de remédier aux inconvénients des procédés et appareils précités. Il vise un dispositif de détermination rapide et précise de la puissance d'un réacteur nucléaire à eau sous pression, à une ou plusieurs boucles de réfrigération en régime permanent et pendant les phases de fonctionnement transitoire comprenant des moyens de mesure de la puissance neutronique et des moyens de mesure de la température du fluide primaire, en un point de la branche froide et en un point de la branche chaude, pour chacune des boucles de réfrigération. En outre, dans un mode préférentiel, il permet d'obtenir également de façon aussi simple, rapide et précise la puissance secondaire, c'est-à-dire la puissance des générateurs de vapeur de chaque boucle de réfrigération du réacteur.

Selon l'invention, le dispositif comporte, pour chacune de ses boucles de réfrigération:

- des moyens de calcul de l'enthalpie du fluide primaire dans la branche froide et dans la branche chaude à partir desdites mesures de températures,

- un sommateur calculant l'élévation d'enthalpie du fluide primaire pendant la traversée du cœur, par la différence de l'enthalpie dans la branche chaude et de l'enthalpie dans la branche froide retardé par un opérateur de décalage temporel correspondant au temps de transit moyen $\tau_0$ d'une molécule de fluide entre les points de mesure de température branche froide et branche chaude,

- un multiplicateur de l'élévation d'enthalpie par le débit du fluide primaire,

- un comparateur du signal de puissance thermique obtenu et du signal de puissance neutronique mesuré, rendu dynamiquement équivalent au signal de puissance thermique,

- un correcteur du signal de mesure de puissance neutronique en fonction du signal issu dudit comparateur.

Le signal de mesure de puissance neutronique est, dans un mode préféré de réalisation de l'invention, rendu dynamiquement équivalent au signal de puissance thermique au moyen d'un modèle ponctuel de transfert thermique entre le flux nucléaire et le flux thermique au fluide primaire, un modèle ponctuel de transfert thermique du fluide dans le cœur, correspondant au temps de transit d'une molécule de fluide primaire du centre du cœur à la sortie du cœur et un opérateur de décalage temporel correspondant au temps de transit d'une molécule de fluide primaire de la sortie du cœur au point de mesure de la température branche chaude.

De préférence, le correcteur du signal de mesure de puissance neutronique est un intégrateur.

En outre, il est préférable de corriger le signal de mesure de puissance neutronique en fonction des variations de la température mesurée dans la branche froide, avant de comparer ce signal au signal de puissance thermique.

On a avantage à compléter le dispositif selon l'invention par un filtre du signal de débit primaire placé en amont dudit multiplicateur afin de tenir compte de la variation du temps de transit moyen d'une molécule de fluide primaire de la branche froide à la branche chaude en fonction du débit primaire.

En outre on préférera compléter le dispositif de détermination rapide et précise de la puissance primaire d'un réacteur nucléaire telle que décrite ci-dessus par un dispositif de détermination rapide et précise de la puissance secondaire du réacteur, comportant, pour chaque boucle, outre les moyens de mesure de température et de calcul de l'enthalpie dans la branche froide et dans la branche chaude précités, des moyens de détermination imprécise mais rapide de la puissance thermique produite par le générateur de vapeur associé au réacteur à partir de mesures de la température et du débit de l'eau d'alimentation, de la pression et du débit de vapeur du générateur de vapeur, un sommateur calculant la diminution d'enthalpie du fluide primaire pendant la traversée du générateur de vapeur par la différence d'enthalpie dans la branche chaude et dans la branche froide, l'enthalpie dans la branche chaude étant retardée par un opérateur de décalage temporel correspondant au temps de transit d'une molécule de fluide entre les deux points de mesure de température, un multiplicateur de la diminution d'enthalpie par le débit du fluide primaire, un comparateur du signal de puissance thermique absorbée par le générateur de vapeur, obtenu à la sortie du multiplicateur et dudit signal de la puissance thermique produite par le générateur de vapeur tel que déterminé plus haut, ce signal étant rendu dynamiquement équivalent au signal de puissance thermique absorbée par le générateur de vapeur, un correcteur du signal de puissance produite par le générateur de vapeur en fonction du signal issu dudit comparateur.

De préférence, le signal de mesure de la puissance thermique produite par le générateur de vapeur est rendu dynamiquement équivalent au signal de puissance thermique absorbée par le générateur de vapeur au moyen d'un modèle ponctuel de transfert thermique entre le fluide secondaire et le fluide primaire, un modèle ponctuel de transfert thermique du fluide primaire dans le générateur de vapeur, correspondant au temps de transit d'une molécule de fluide primaire du centre du générateur de vapeur à la sortie du générateur de vapeur, un opérateur de décalage temporel correspondant au temps de transit d'une molécule de fluide primaire de la sortie du générateur de vapeur au point de mesure de température branche froide.

On préférera utiliser un intégrateur pour corriger le signal de mesure de la puissance thermique absorbée par le générateur de vapeur.

En outre, la dynamique des mesures de la température du fluide primaire dans la branche froide et dans la branche chaude est compensée par un correcteur à avance de phase situé à la sortie du multiplicateur de la variation d'enthalpie du fluide primaire par le débit du fluide primaire.

La description plus détaillée qui va suivre permettra de mieux comprendre l'invention, en référence au schéma de la figure 1 annexée, qui montre un mode de réalisation de l'invention, appliquée à un réacteur nucléaire à eau sous pression ne comportant, pour faciliter la compréhension, qu'une seule boucle.

De façon connue le cœur du réacteur nucléaire est traversé par un fluide primaire circulant dans une boucle primaire; ce fluide absorbe de l'énergie pendant sa traversée du cœur et cède son énergie à un fluide secondaire circulant dans une boucle secondaire pendant sa traversée du générateur de vapeur. Le circuit primaire comporte une branche froide et une branche chaude, la branche froide étant bien sûr située entre le générateur de vapeur et le cœur et la branche chaude entre le cœur et le générateur de vapeur, quand on suit le sens du fluide.

De façon classique, on mesure la température du fluide primaire en deux points, l'un des points étant situé sur la branche froide et l'autre point étant situé sur la branche chaude. Sur la figure 1, on a repéré par 1 le signal de température branche froide et par 1' le signal de température branche chaude.

Un opérateur 2 calcule la valeur de l'enthalpie au point de mesure de la température branche froide et au point de mesure de la température branche chaude de façon classique. On peut par exemple déterminer l'enthalpie par un polynome du second degré en T, où T est la température mesurée. Pour obtenir une meilleure précision on peut aussi faire le calcul suivant un polynome du troisième degré. On obtient ainsi deux signaux 3 et 3' d'enthalpie dans la branche froide et d'enthalpie dans la branche chaude.

Deux opérateurs de décalage temporel 4 et 4' permettent de retarder respectivement les signaux 3 et 3'. Les fonctions de transfert utilisées sont respectivement $\varrho^{-\tau_0 p}$ et $\varrho^{-\tau'_0 p}$ où $\tau_0$ et $\tau'_0$ désignent, pour le premier, le temps global moyen de transit d'une molécule de fluide primaire entre les points de mesure de température branche froide et branche chaude et, pour le second, le temps global moyen de transit d'une molécule de fluide primaire entre les points de mesure de température branche chaude et branche froide (p étant la variable de LAPLACE). Pour plus de précision, on pourrait tenir compte du fait que le temps de transit précité peut être différent pour deux molécules d'eau différentes; en particulier, la configuration du réacteur est telle qu'en général, à la sortie du cœur les molécules d'eau ont des vitesses assez différentes. On pourrait donc, à l'aide d'un intégrateur tenir compte de ce temps de transit différent au lieu de ne considérer que le temps moyen, comme représenté sur la figure 1.

On obtient à la sortie des opérateurs de décalage temporel 4 et 4' des signaux 5 et 5' qui entrent ensuite dans des sommateurs 6 et 6'.

Le sommateur 6 effectue la différence entre le signal 3' d'enthalpie dans la branche chaude et le signal 5 retardé de l'enthalpie dans la branche froide. Le signal de sortie du sommateur 6 est repéré par 7. Le sommateur 6' effectue la différence entre le signal 5' retardé de l'enthalpie dans la branche chaude et le signal 3 de l'enthalpie dans la branche froide. Le signal de sortie du sommateur 6' est repéré par 7'.

Les signaux 7 et 7' entrent respectivement dans des multiplicateurs 8 et 8' où ils sont multipliés par le signal 9 du débit primaire, celui-ci étant mesuré de façon tout à fait classique. Pour plus de précision le signal de débit primaire 9 est filtré en 10 afin de tenir compte de la variation du temps de transit moyen d'une molécule de fluide à travers le cœur. La fonction de transfert du filtre est ici

$$1/1 + \frac{\tau_1}{2} \, p$$

où $\tau_1$ représente le temps de transit moyen d'une molécule de fluide primaire dans le cœur.

On obtient à la sortie du multiplicateur 8 un signal 11 de puissance thermique primaire et à la sortie du multiplicateur 8' un signal 11' représentant la puissance thermique absorbée par le générateur de vapeur.

La dynamique des mesures de la température du fluide primaire dans la branche froide et dans la branche chaude est compensée par deux correcteurs à avance de phases identiques 12 et 12' dans lesquels entrent respectivement les signaux 11 et 11'. Les signaux de sortie de ces correcteurs seront repérés par 13 et 13'. La fonction de transfert de ces correcteurs est

$$\frac{1 + \tau_2 p}{1 + \tau_3 p}$$

où $\tau_2$ est la constante de temps des mesures de température (correcteur de mesure) et où $\tau_3$ est un filtre de réduction du gain transitoire du correcteur de mesure.

Les signaux 13 et 13' entrent ensuite dans des comparateurs 14 et 14' où il sont comparés respectivement à un signal de puissance neutronique et à un signal représentant la puissance thermique produite par le générateur de vapeur.

Le signal de puissance neutronique est élaboré de façon classique au moyen de chambres de mesure de flux neutronique situées à l'extérieur du cœur. Le signal de puissance neutronique est repéré par 15. Le signal 15 est corrigé en fonction des variations de la température au moyen d'un coefficient $K_1$ de correction entre la mesure de flux neutronique et la température de l'espace annulaire où, de façon classique, se trouvent les chambres de puissance neutronique, cette température pouvant être assimilée à la température branche froide. Sur la figure 1, $\theta$ représente bien entendu une température de consigne. Afin de respecter au mieux la phase des signaux pendant les transitoires, la correction de température est décalée dans le temps par le terme $\varrho^{-\tau_{15}p}$ ($\tau_{15}$ est le temps de transit entre le point de mesure branche froide et l'entrée du cœur). On peut adjoindre à ce terme un filtre passe-bas

$$\frac{1}{1 + \tau_{16} \, p}$$

pour tenir compte du temps de réponse des chambres de mesure de flux à une variation de la température branche froide. On a repéré par 16 le signal de puissance neutronique corrigé en température.

Le signal 16 est rendu dynamiquement équivalent au signal 13 au moyen d'un modèle ponctuel 17 de transfert thermique entre le flux nucléaire et le flux thermique du fluide primaire ($\tau_4$ représente la constante de temps de transfert thermique); le signal de sortie du modèle 17 entre ensuite dans un modèle ponctuel 18 de transfert thermique du fluide primaire dans le cœur, correspondant au temps de transit

$$\frac{\tau_1}{2}$$

d'une molécule de fluide primaire du centre du cœur à la sortie du cœur.

Le signal de sortie du modèle 18 est ensuite retardé par un opérateur de décalage temporel 19 correspondant au temps de transit $\tau_5$ d'une molécule de fluide primaire de la sortie du cœur jusqu'au point de mesure de température branche chaude.

Le signal de puissance neutronique rendu dynamiquement équivalent au signal de puissance thermique primaire est repéré par 20. Le signal 20 est comparé au signal 13 dans le comparateur 14. Le signal 21 issu de ce comparateur sert à corriger au moyen d'un correcteur 22 le signal de puissance neutronique 16. Ce correcteur 22 comprend un intégrateur de constante d'intégration $\tau_6$ et de gain $K_2$. $\tau_7$ et $\tau_8$ sont respectivement des constantes de temps d'avance de phase et de retard de phase, $\tau_8$ étant inférieur à $\tau_7$.

Le signal 23 issu du correcteur 22 est ajouté au signal 16 dans le sommateur 24.

On obtient à la sortie du sommateur 24 un signal de puissance neutronique étalonné et à la sortie du modèle 17 un signal de puissance thermique étalonné.

Le dispositif selon l'invention permet donc d'obtenir au moyen de seulement deux capteurs de mesure de température et de chambres classiques de mesure de puissance neutronique un signal rapide et précis de la puissance primaire du réacteur.

Le dispositif selon l'invention permet en outre, au moyen des deux mêmes capteurs de température d'obtenir un signal rapide et précis de la puissance secondaire du réacteur, comme nous allons le décrire ci-dessous.

Pour élaborer un signal rapide et précis de la puissance secondaire du réacteur on compare, en 14', le signal 13' à un signal représentant la puissance thermique produite par le générateur de vapeur de la boucle de réfrigération considérée, élaboré par un bilan secondaire simplifié; ce signal est imprécis mais a le grand avantage d'être à réponse rapide. Ce signal 16' est élaboré dans un calculateur 25 à partir de 4 signaux, à savoir la température et le débit de l'eau d'alimentation du générateur de vapeur ainsi que la pression et le débit de vapeur produite par le générateur de vapeur.

Le signal 16' est rendu dynamiquement équivalent au signal 13' au moyen d'un modèle ponctuel 17' de transfert thermique entre le fluide secondaire et le fluide primaire ($\tau_9$ est la constante de temps de transfert thermique). Le modèle 17' est suivi d'un modèle ponctuel 18' de transfert thermique du fluide primaire dans le générateur de vapeur, correspondant au temps de transit

$$\frac{\tau_{10}}{2}$$

d'une molécule de fluide primaire du centre du générateur de vapeur à la sortie du générateur de vapeur. Un opérateur de décalage temporel 19' permet de tenir compte du temps de transit $\tau_{11}$ d'une molécule de fluide primaire de la sortie du générateur de vapeur au point de mesure de température branche froide. On obtient à la sortie de l'opérateur 19' un signal 20' représentant la puissance thermique produite par le générateur de vapeur, ce signal étant rendu dynamiquement équivalent au signal 13' représentant la puissance thermique absorbée par le générateur de vapeur.

Ces deux signaux 20' et 13' sont comparés dans le comparateur 14'. Le signal 21' issu du comparateur 14' entre dans un correcteur 22'. Le signal 23' issu de ce correcteur sert à corriger le signal 16' auquel il est ajouté dans un sommateur 24'. Le correcteur 22' est ici un intégrateur dont la constante d'intégration est $\tau_{12}$ et le gain $K_3$. $\tau_{13}$ et $\tau_{14}$ sont des constantes de temps d'avance de phase et de retard de phase du correcteur ($\tau_{14}$ est inférieur à $\tau_{13}$).

On obtient à la sortie du sommateur 24' un signal de puissance secondaire étalonnée, rapide et précis.

Le dispositif selon l'invention permet donc, à partir des deux capteurs de température branche froide et branche chaude, des chambres de mesure de puissance neutronique et d'un bilan secondaire simplifié, d'obtenir à tout instant un signal rapide et précis de puissance primaire (puissance neutronique et puissance thermique transmise au centre de gravité du cœur) et de puissance secondaire. Ce dispositif est particulièrement intéressant pendant les phases de fonctionnement transitoire. Il permet de détecter instantanément toute variation de la puissance primaire ou secondaire, ce qui permet de remédier très rapidement aux défaillances éventuelles ayant provoqué ces variations. le dispositif selon l'invention contribue à une protection correcte du cœur, en particulier dans les réacteurs à haute performance que l'on réalise à l'heure actuelle.

Bien entendu l'invention n'est pas limitée au mode de réalisation décrit uniquement à titre d'exemple mais elle couvre également les réalisations qui n'en différeraient que par des détails, par des variantes d'exécution ou par l'utilisation de moyens équivalents et ce dans le cadre des revendications.

Les correcteurs 22 et 22' pourraient par exemple être conçus de manière différente, de façon à rendre optimale la réponse du signal de correction. De plus, les sommateurs 24 et 24' pourraient être remplacés par des multiplicateurs, afin de conserver le zéro de la mesure.

L'exemple décrit concerne une seule boucle mais l'invention peut bien sûr s'appliquer à un réacteur à plusieurs boucles.

**Revendications**

1. Dispositif de détermination rapide et précise de la puissance d'un réacteur nucléaire à eau sous pression, en régime permanent et pendant les phases de fonctionnement transitoire, comprenant des moyens de mesure de la puissance neutronique (15) et des moyens de mesure de la température du fluide primaire, en un point de la branche froide et en un point de la branche chaude, pour chacune des boucles de réfrigération, caractérisé par le fait qu'il comporte en outre, pour chacune des boucles de réfrigération,
– des moyens de calcul de l'enthalpie du fluide primaire dans la branche froide et dans la branche chaude à partir desdites mesures de températures,
– un sommateur (6) calculant l'élévation d'enthalpie (7) du fluide primaire pendant la traversée du cœur, par la différence de l'enthalpie (3') dans la branche chaude et de l'enthalpie (3) dans la branche froide retardé par un opérateur de décalage temporel (4) correspondant au temps de transit moyen $\tau_0$ d'une molécule de fluide primaire entre les deux points de mesure de température,
– un multiplicateur (8) de l'élévation de l'enthalpie (7) par le débit du fluide primaire (9),

– un comparateur (14) du signal de puissance thermique obtenu (11) et du signal de puissance neutronique mesuré (15) dynamiquement équivalents au signal de puissance thermique (11),

– un correcteur du signal de mesure de puissance neutronique (15) en fonction du signal (21) issu dudit comparateur (14).

2. Dispositif selon la revendication 1, caractérisé par le fait que le signal de mesure (15) de puissance neutronique est rendu dynamiquement équivalent au signal (11) de puissance thermique au moyen d'un modèle ponctuel (17) de transfert thermique entre le flux nucléaire (15) et le flux thermique au fluide primaire, d'un modèle ponctuel (18) de transfert thermique du fluide primaire dans le cœur, correspondant au temps de transit

$$\frac{\tau_1}{2}$$

d'une molécule de fluide primaire du centre du cœur à la sortie du cœur, et d'un opérateur (19) de décalage temporel correspondant au temps de transit $\tau_5$ d'une molécule de fluide primaire de la sortie du cœur au point de mesure de température branche chaude.

3. Dispositif selon la revendication 1 ou 2, caractérisé par le fait que le correcteur (22) du signal de mesure de puissance neutronique (15) est un intégrateur.

4. Dispositif selon l'une quelconque des revendications précédentes, caractérisé par le fait que, avant d'être comparé au signal de puissance thermique (11), le signal de mesure de puissance neutronique (15) est corrigé en fonction des variations de la température de la branche froide au moyen d'un coefficient de correction $K_1$.

5. Dispositif selon la revendication 4, caractérisé par le fait que le signal de température branche froide utilisé pour corriger le signal de puissance neutronique (15) est retardé par un opérateur de décalage temporel correspondant au temps de transit $\tau_{15}$ d'une molécule de fluide primaire entre le point de mesure de température branche froide et l'entrée du cœur.

6. Dispositif selon l'une des revendications 4 ou 5, caractérisé par le fait que ledit signal de température branche froide est filtré pour tenir compte du temps de réponse du signal de puissance neutronique (15) à une variation de la température branche froide.

7. Dispositif selon l'une quelconque des revendications précédentes, caractérisé par le fait qu'il comporte en outre un dispositif de détermination rapide et précise de la puissance secondaire du réacteur, comportant, pour chaque boucle de réfrigération, outre les moyens de mesure de température et de calcul de l'enthalpie dans la branche froide et dans la branche chaude précités, des moyens (25) imprécis mais rapides de détermination de la puissance thermique produite par le générateur de vapeur associé au réacteur, un sommateur (6') calculant la diminution d'enthalpie du fluide primaire pendant la traversée du générateur de vapeur, par la différence d'enthalpie dans la branche chaude (3') et dans la branche froide (3), l'enthalpie dans la branche chaude (3') étant retardée par un opérateur (4') de décalage temporel correspondant au temps de transit $\tau_0$ d'une molécule de fluide primaire entre les deux points de mesure de température, un multiplicateur (8') de la diminution d'enthalpie (7') par le débit (9) du fluide primaire, un comparateur (14') du signal (11') de puissance thermique absorbée par le générateur de vapeur, obtenu à la sortie du multiplicateur (8') et d'un signal (16') de la puissance thermique produite par le générateur de vapeur déterminée par lesdits moyens (25), ce signal (16') étant rendu dynamiquement équivalent au signal (11') de puissance thermique absorbée par le générateur de vapeur et un correcteur (22') du signal (16') de la puissance thermique produite par le générateur de vapeur en fonction du signal (21') issu du comparateur (14').

8. Dispositif selon la revendication 7, caractérisé par le fait que le signal (16') de mesure de la puissance thermique produite par le générateur de vapeur est rendu dynamiquement équivalent au signal (11') de puissance thermique absorbée par le générateur de vapeur au moyen d'un modèle ponctuel (17') de transfert thermique entre le fluide secondaire et le fluide primaire traversant le générateur de vapeur, d'un modèle ponctuel (18') de transfert thermique du fluide primaire dans le générateur de vapeur, correspondant au temps de transit

$$\frac{\tau_{10}}{2}$$

d'une molécule de fluide primaire du centre du générateur de vapeur à la sortie du générateur de vapeur et d'un opérateur (19') de décalage temporel correspondant au temps de transit $\tau_{11}$ d'une molécule de fluide primaire de la sortie du générateur de vapeur au point de mesure de température branche froide.

9. Dispositif selon la revendication 7 ou 8, caractérisé par le fait que le correcteur (22') du signal de mesure (16') de la puissance thermique absorbée par le générateur de vapeur est un intégrateur.

10. Dispositif selon l'une quelconque des revendications précédentes, caractérisé par le fait que la dynamique des mesures de la température du fluide primaire dans la branche froide et dans la branche chaude est compensée par un correcteur à avance de phases (12, 12'), situé à la sortie du multiplicateur (8, 8') de la variation d'enthalpie (7, 7') du fluide primaire par le débit (9) du fluide primaire.

11. Dispositif selon l'une quelconque des revendications précédentes, caractérisé par le fait que le signal (9) de débit du fluide primaire est filtré avant d'entrer dans les multiplicateurs (8, 8') afin de tenir compte de la variation du temps de transit moyen $\tau_1$ d'une molécule de fluide primaire pour traverser le cœur.

## Patentansprüche

1. Vorrichtung zum schnellen und genauen Bestimmen der Leistung eines Druckwasserkernreaktors in permantem Betrieb und während Übergangsbetriebsphasen mit Organen zur Messung der Neutronenleistung (15) und Organen zur Messung der Temperatur des Primärfluids an einem Punkt des kalten Leitungsabschnitts und an einem Punkt des heissen Leitungsabschnitts für jede der Kühlschleifen, dadurch gekennzeichnet, dass die Vorrichtung für jede der Kühlschleifen ferner aufweist:

- Mittel zur Berechnung der Enthalpie des Primärfluids in dem kalten Leitungsteil und dem heissen Leitungsteil, ausgehend von den Temperaturmessungen,
- einen Summierer (6), der den Anstieg der Enthalpie (7) des Primärfluids während der Durchströmung des Reaktorkerns über die Differenz der Enthalpie (3') in dem heissen Leitungsteil und der Enthalpie (3) im kalten Leitungsteil berechnet, wobei letztere durch einen zeitlichen Verschiebungsoperator (4) entsprechend der mittleren Übergangszeit $\tau_0$ eines Moleküls des Primärfluids zwischen zwei Temperaturmesspunkten verzögert ist,
- ein Organ (8) zum Multiplizieren des Anstiegs der Enthalpie (7) mit dem Primärfluid (9) Durchsatz,
- einen Vergleicher (14) zum Vergleichen des erhaltenen thermischen Leistungssignals (11) und des gemessenen Neutronenleistungssignals (15), das dynamisch mit dem thermischen Leistungssignal (11) äquivalent ist, und
- ein Korrekturglied für das Messsignal der Neutronenleistung (15) in Abhängigkeit von dem Signal (21), das von dem Vergleicher (14) ausgegeben wird.

2. Vorrichtung nach Anspruch 1, dadurch gekennzeichnet, dass das Messsignal (15) der Neutronenleistung dynamisch an das Signal (11) der thermischen Leistung angepasst wird mittels eines punktuellen thermischen Übergangsmodells (17) eines Übergangs zwischen dem Neutronenfluss (15) und dem thermischen Fluss im Primärfluid und mittels eines punktuellen Modells (18) eines thermischen Übergangs des Primärfluids im Reaktorkern, das der Übergangszeit

$$\frac{\tau_1}{2}$$

eines Moleküls des Primärfluids vom Zentrum des Reaktorkerns bis zum Ausgang des Kerns entspricht und mittels eines zeitlichen Verschiebeoperators (19), der der Übergangszeit $\tau_5$ eines Moleküls des Primärfluids vom Ausgang des Reaktorkerns bis zum Messpunkt der Temperatur im heissen Leitungsteil entspricht.

3. Vorrichtung nach Anspruch 1 oder 2, dadurch gekennzeichnet, dass das Korrekturglied (22) des Messsignals der Neutronenleistung (15) ein Integrator ist.

4. Vorrichtung nach einem der vorstehenden Ansprüche, dadurch gekennzeichnet, dass das Messsignal der Neutronenleistung (15) vor dem Vergleich mit dem Signal der thermischen Leistung (11) in Abhängigkeit von den Temperaturänderungen des kalten Leistungsteils mittels eines Korrekturkoeffizienten $K_1$ korrigiert wird.

5. Vorrichtung nach Anspruch 4, dadurch gekennzeichnet, dass das Temperatursignal des kalten Leitungsteils, das dazu verwendet wird, das Signal der Neutronenleistung (15) zu korrigieren mittels eines zeitlichen Verschiebeoperators entsprechend der Übergangszeit $\tau_{15}$ eines Moleküls des Primärfluids zwischen dem Messpunkt der Temperatur im kalten Leitungsteil und dem Eingang des Reaktorkerns verzögert wird.

6. Vorrichtung nach einem der Ansprüche 4 oder 5, dadurch gekennzeichnet, dass das Temperatursignal des kalten Leitungsteils gefiltert wird, um der Responsezeit des Neutronenleistungssignals (15) auf eine Temperaturänderung im kalten Leitungsteil Rechnung zu tragen.

7. Vorrichtung nach einem der vorstehenden Ansprüche, dadurch gekennzeichnet, dass sie ausserdem eine Vorrichtung zur schnellen und präzisen Messung der Sekundärleistung des Reaktors aufweist, ferner pro Kühlschleife mit Organen zur Messung der Temperatur und zur Berechnung der Enthalpie in dem kalten Leitungsteil und in dem vorgenannten heissen Leitungsteil, weniger genauen, jedoch sehr schnellen Mitteln (25) zur Bestimmung der thermischen Leistung, die von dem mit dem Reaktor verbundenen Dampferzeuger erzeugt wird, einem Summierglied (6'), das die Abnahme der Enthalpie des Primärfluids während der Durchgangsphase des Dampfgenerators durch die Enthalpiedifferenz in dem heissen Leitungsteil (3') und dem kalten Leitungsteil (3) berechnet, wobei die Enthalpie im heissen Leitungsteil (3') mittels eines zeitlichen Verschiebeoperators (4') verzögert wird, der der Übergangszeit $\tau_0$ eines Moleküls des Primärfluids zwischen zwei Temperaturmesspunkten entspricht, mit einem Multiplizierglied (8'), zum Multiplizieren der Enthalpieabnahme (7') mit dem Primärfluiddurchsatz (9), einem Vergleicher (14') des thermischen Leistungssignals (11'), die von dem Dampferzeuger aufgenommen ist, wobei das Signal am Ausgang des Multiplizierglieds (8') erhalten wird und eines Signals (16') der thermischen Leistung, die durch den Dampferzeuger erzeugt wird und durch die Messorgane (25) bestimmt wird, wobei dieses Signal (16') dynamisch zu dem Signal (11') der thermischen Leistung, die durch den Dampferzeuger absorbiert wird, äquivalent gemacht wird und mit einem Korrekturglied (22') zur Korrektur des Signals (16') der thermischen Leistung, die durch den Dampferzeuger erzeugt wird, in Abhängigkeit vom Signal (21'), das vom Vergleicher (14') abgegeben wird.

8. Vorrichtung nach Anspruch 7, dadurch gekennzeichnet, dass das Messsignal (16') der thermischen Leistung, die vom Dampferzeuger erzeugt wird, dynamisch mit dem Signal (11') der thermischen Leistung, die vom Dampferzeuger absorbiert wird, mittels eines punktuellen (17') thermischen Übergangsmodells äquivalent gemacht wird, wobei der Übergang zwischen dem Sekundärfluid und dem Primärfluid, das den Dampferzeuger durchquert, betrachtet wird, und mittels eines punktuellen thermischen Übergangsmodells (18') des Primärfluids im Dampferzeuger, was der Übergangszeit

$$\frac{\tau_{10}}{2}$$

eines Moleküls des Primärfluids im Zentrum des Dampferzeugers zum Ausgang des Dampferzeugers entspricht und wobei ein zeitlicher Verzögerungsoperator (19') der Übergangszeit $\tau_{11}$ eines Moleküls des Primärfluids am Ausgang des Dampferzeugers zum Messpunkt der Temperatur im kalten Leitungsteil entspricht.

9. Vorrichtung nach Anspruch 7 oder 8, dadurch gekennzeichnet, dass das Korrekturglied (22') des Messsignals (16') der thermischen Leistung, die vom Dampferzeuger absorbiert wird, ein Integrator ist.

10. Vorrichtung nach einem der vorstehenden Ansprüche, dadurch gekennzeichnet, dass die Dynamik der Temperaturmessungen und des Primärfluids im kalten Leitungsteil und im heissen Leitungsteil durch eine vorhergehende Korrektur der Phasen (12, 12'), die am Ausgang des Multiplizierglieds (8, 8') der Änderung der Enthalpie (7, 7') des Primärfluids mit dem Primärfluiddurchsatz (9) kompensiert wird.

11. Vorrichtung nach einem der vorstehenden Ansprüche, dadurch gekennzeichnet, dass das Durchsatzsignal (9) des Primärfluids vor seinem Eintritt in das Multiplizierglied (8, 8') gefiltert wird, um die Zeitänderung des mittleren Durchgangs $\tau_1$ eines Moleküls des Primärfluids durch den Reaktorkern zu berücksichtigen.

## Claims

1. A device for fast and precise determination of the power of a pressurized water nuclear reactor in steady state operation and during periods of transient operation, comprising means for measuring, on the one hand, the neutron power (15) and, on the other hand, the temperature of the primary fluid at a point in the cold branch and at a point in the hot branch, for each of the cooling loops, characterized by the fact that it further comprises, for each of the cooling loops,

– means for computing the enthalpy of the primary fluid in the cold branch and in the hot branch from the said temperature measurements,

– a register (6) which computes the enthalpy increase (7) of the primary fluid as it crosses the core, from the difference between the enthalpy (3') in the hot branch and the enthalpy (3) in the cold branch, delayed by a time shift operator (4) expressing the average time of transit $\tau_0$ of a molecule of primary fluid between the two points of temperature measurement,

– a multiplier (8) of the increase in the enthalpy (7) by the flow rate of the primary fluid (9),

– a comparator (14) of the thermal power signal which is obtained (11) and of the neutron power signal which is measured (15) and made dynamically equivalent to the thermal power signal (11),

– a corrector of the neutron power measurement signal (15) depending on the signal (21) produced by the said comparator (14).

2. The device as claimed in claim 1, characterized by the fact that the neutron power measurement signal (15) is made dynamically equivalent to the thermal power signal (11) by means of a point model (17) of heat transfer between the nuclear flux (15) and the thermal flux to the primary fluid, of a point model (18) of heat transfer of the primary fluid in the core, corresponding to the time of transit

$$\frac{\tau_1}{2}$$

of a molecule of primary fluid from the center of the core to the outlet of the core, and by means of a time shift operator (19) expressing the time of transit $\tau_5$ of a molecule of primary fluid from the core outlet to the point of temperature measurement in the hot branch.

3. The device as claimed in claim 1 or 2, characterized by the fact that the corrector (22) of the neutron power measurement signal (15) is an integrator.

4. The device as claimed in any of the preceding claims, characterized by the fact that, before being compared to the thermal power signal (11), the neutron power measurement signal (15) is corrected for the temperature variations in the cold branch by means of a correction coefficient $K_1$.

5. The device as claimed in claim 4, characterized by the fact that the cold branch temperature signal employed to correct the neutron power signal (15) is delayed by a time shift operator expressing the time of transit $\tau_{15}$ of a molecule of primary fluid between the point of temperature measurement in the cold branch and the core inlet.

6. The device as claimed in either of claims 4 or 5, characterized by the fact that the said cold branch temperature signal is filtered to take account of the response time of the neutron power signal (15) to a variation of the cold branch temperature.

7. The device according to any of the preceding claims, characterized by the fact that it comprises in addition a device for fast and precise determination of the secondary power of the reactor, comprising, for each cooling loop, in addition to the said means for measuring temperature and computing the enthalpy in the cold branch and in the hot branch, precision-lacking but fast means (25) for determining the thermal power produced by the steam generator associated with the reactor, a register (6') computing the reduction in the enthalpy of the primary fluid as it crosses the steam generator, from the difference between the enthalpy in the hot branch (3'), and in the cold branch (3), the enthalpy in the hot branch (3') being delayed by a time shift operator (4') expressing the time of transit $\tau_0$ of a molecule of primary fluid betweenthe two temperature measurement points, a multiplier (8') of the decrease of enthalpy (7') by the flow rate (9) of the primary fluid, a comparator (14') of the signal (11'), which is obtained at the multiplier output (8'), of the thermal power absorbed by the steam generator, to a signal (16') of the thermal power produced by the steam generator and determined by the said means (25), this signal (16') being made dynamically equivalent to the signal (11') of thermal power absorbed by the steam generator and a corrector (22') of the signal (16') of the thermal power produced by the steam generator depending on the signal (21') produced by the comparator (14').

8. The device as claimed in claim 7, characterized by the fact that the measurement signal (16') of the thermal power produced by the steam generator is made dynamically equivalent to the signal (11') of thermal power absorbed by the steam generator by means of a point model (17') of heat transfer between the secondary fluid and the primary fluid passing through the steam generator, of a point model (18') of heat transfer of the primary fluid in the steam generator, corresponding to the time of transit

$$\frac{\tau_{10}}{2}$$

of a molecule of primary fluid from the center of the steam generator to the outlet of the steam generator and by means of a time shift operator (19') expressing the time of transit $\tau_{11}$ of a molecule of primary fluid from the outlet of the steam generator to the point of measurement of the cold branch temperature.

9. The device as claimed in claim 7 or 8, characterized by the fact that the corrector (22') of the measurement signal (16') of the thermal power absorbed by the steam generator is an integrator.

10. The device as claimed in any of the preceding claims, characterized by the fact that the dynamics of the measurements of the temperature of the primary fluid in the cold branch and in the hot branch are compensated by a phase lead corrector (12, 12') placed at the output of the multiplier (8, 8') of the change in enthalpy (7, 7') of the primary fluid by the flow rate (9) of the primary fluid.

11. The device as claimed in any of the preceding claims, characterized by the fact that the signal (9) of flow rate of the primary fluid is filtered to take into acount the variation of the average time of transit $\tau_1$ of a molecule of primary fluid passing through the core.

eau alimentaire    vapeur

Temperature débit    pression débit

Température branche Froide

Température branche chaude   débit primaire

Puissance neutronique

Élaboration du bilan Secondaire simplifié

$\dfrac{e^{-\tau_{15}P}}{1+\tau_{16}P}$   26

$+ \; \theta$

$K_1$   15

2

3    3'   9

4    4'

$e^{-\tau_0 P}$   $e^{-\tau'_0 P}$

5    5'   6

7

6'

16

Puissance Secondaire étalonnée   24'

7'

$\dfrac{1}{1+\tau_1/2P}$   10

$\dfrac{1}{1+\tau_9 P}$   17'

$\times$   8

8'   11'

11   8

24

Puissance neutronique étalonnée

$\dfrac{1}{1+\tau_{10}/2P}$   18'

23'

$\dfrac{1+\tau_2 P}{1+\tau_3 P}$   12'

$\dfrac{1+\tau_2 P}{1+\tau_3 P}$   12

$\dfrac{1}{1+\tau_4 P}$   17

Puissance Thermique étalonnée

$\dfrac{1}{1+\tau_{1/2} P}$   18

19'

$e^{-\tau_{11}P}$   14'   13'

13   20   19

14   $e^{-\tau_5 P}$

20'   21'

21   23

$K_3\left(1+\dfrac{1}{\tau_{12}P}\right)\dfrac{1+\tau_{13}P}{1+\tau_{14}P}$   22'

$K_2\left(1+\dfrac{1}{\tau_6 P}\right)\dfrac{1+\tau_7 P}{1+\tau_8 P}$   22